(19) Europäisches Patentamt
European Patent Office
Office européen des brevets

(11) **EP 4 691 260 A1**

(12) **EUROPEAN PATENT APPLICATION**
published in accordance with Art. 153(4) EPC

(43) Date of publication:
**11.02.2026 Bulletin 2026/07**

(21) Application number: 24784972.2

(22) Date of filing: **05.04.2024**

(51) International Patent Classification (IPC):
*A23L 5/00* (2016.01)    *A23J 3/14* (2006.01)
*A23J 3/34* (2006.01)    *A23L 2/38* (2021.01)
*A23L 2/52* (2006.01)    *A23L 2/66* (2006.01)

(52) Cooperative Patent Classification (CPC):
A23J 3/14; A23J 3/34; A23L 2/38; A23L 2/52;
A23L 2/66; A23L 5/00

(86) International application number:
**PCT/JP2024/014021**

(87) International publication number:
**WO 2024/210190 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 JP 2023062302**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Vossius & Partner**
**Patentanwälte Rechtsanwälte mbB**
**Siebertstraße 3**
**81675 München (DE)**

(54) **MINERAL ENRICHMENT AGENT FOR VEGETABLE PROTEIN-CONTAINING LIQUID COMPOSITION**

(57)    The purpose of the present invention is to provide a novel technique capable of enriching a mineral derived from a vegetable material in a soluble fraction of a vegetable protein-containing liquid composition. Provided is a mineral enrichment agent for a soluble fraction of a vegetable protein-containing liquid composition, the mineral enrichment agent containing a protein deamidase as an active ingredient.

**EP 4 691 260 A1**

## Description

Technical Field

The present invention relates to a processing technique for enriching minerals in a soluble fraction of a plant protein-containing liquid composition.

Background Art

Drinks rich in nutrients such as proteins have been widely familiar to people since they can easily take nutrients. In recent years, plant milk prepared using plant raw materials such as soybean, oat, and almond, which are rich in plant protein, has been widely spread as an alternative to animal milk typified by milk, on the basis of an increase in the number of vegetarians, allergic problems, religious reasons, and the like.

On the other hand, in view of the fact that the nutritional components of plant milk are different from those of animal milk, a product in which nutrients are enhanced by blending calcium into plant milk is also sold.

In addition, a technique for strengthening nutrients in foods prepared from plant raw materials has been reported. For example, PTL 1 discloses that, for the purpose of maintaining a low caloric intake while being rich in whole grains and dietary fiber, at least two essential minerals and at least four essential vitamins are blended into a nutritional product containing a hydrolyzed whole-grain composition and $\alpha$-amylase, or a fragment thereof, that, in its active state, does not exhibit hydrolytic activity toward dietary fiber. In addition, NPL 1 reports a technique for reducing the phytic acid level in food by applying phytase during food processing, and NPL 2 describes that this technique is applied to a soybean protein isolate, soy milk, pea flour, bread dough, and grains.

Citation List

Patent Literature

PTL 1: Japanese Translation of PCT International Application Publication No. 2013-513368

Non Patent Literature

NPL 1: Biotechnol. Adv. (1991) 122:145-161
NPL 2: Int. J. Food Sci. Technol. (2002) 37:823-833

Summary of Invention

Technical Problem

In the technique described in PTL 1, since minerals are added from the outside, the minerals of the food raw material itself cannot be effectively used. The techniques described in NPLs 1 and 2 are limited in that the degree to which the mineral can be solubilized depends on the amount of phytic acid contained in the food raw material while the mineral of the food raw material itself can be effectively used.

Therefore, an object of the present invention is to provide a novel technique capable of enriching minerals derived from plant raw materials in a soluble fraction of a plant protein-containing liquid composition.

Solution to Problem

As a result of intensive studies, the present inventor has found that minerals derived from plant raw materials can be enriched in a soluble fraction of a plant protein-containing food and drink to be obtained by performing a treatment of allowing a protein deamidase to act on a plant protein-containing liquid composition. The present invention has been accomplished by further studies based on this knowledge.

That is, the present invention provides inventions of the following aspects.

Item 1. An agent for mineral enrichment in a soluble fraction of a plant protein-containing liquid composition, the mineral enrichment agent containing a protein deamidase.
Item 2. The agent for mineral enrichment of a plant protein-containing liquid composition according to item 1, which is used for increasing the amount of soluble minerals.

Item 3. The agent for mineral enrichment of a plant protein-containing liquid composition according to item 1 or 2, which is used for improving binding of minerals to soluble proteins.

Item 4. The agent for mineral enrichment of a plant protein-containing liquid composition according to any one of items 1 to 3, in which the minerals are selected from the group consisting of zinc, iron, calcium, and magnesium.

Item 5. The agent for mineral enrichment of a plant protein-containing liquid composition according to any one of items 1 to 4, in which the protein deamidase is protein glutaminase.

Item 6. The agent for mineral enrichment of a plant protein-containing liquid composition according to any one of items 1 to 5, in which the plant protein is a protein of a plant selected from the group consisting of pulse crops, cereal crops, and nuts and seeds.

Item 7. A method for mineral enrichment in a soluble fraction of a plant protein-containing liquid composition, the method including the step of allowing a protein deamidase to act on the plant protein-containing liquid composition.

Item 8. A method for increasing the amount of soluble minerals in a plant protein-containing liquid composition, the method including the step of allowing a protein deamidase to act on the plant protein-containing liquid composition.

Item 9. A method for improving binding of minerals in a plant protein-containing liquid composition to soluble proteins, the method including the step of allowing a protein deamidase to act on the plant protein-containing liquid composition.

Advantageous Effects of Invention

According to the present invention, minerals derived from plant raw materials in a soluble fraction of a plant protein-containing liquid composition can be enriched. Description of Embodiments

1. Agent for mineral enrichment agent of plant protein-containing liquid composition

The agent for mineral enrichment of the plant protein-containing liquid composition of the present invention is characterized in that it contains a protein deamidase and is used to enrich minerals in a soluble fraction of the plant protein-containing liquid composition.

1-1. Use

The agent for mineral enrichment of the plant protein-containing liquid composition (hereinafter, it is also described as "agent for mineral enrichment".) of the present invention is used for enriching minerals in the soluble fraction of the composition. The soluble fraction means a water-soluble fraction.

An example of an embodiment of a mineral enrichment use in the soluble fraction (hereinafter, it is also described as "first use".) includes a use to increase the amount of soluble minerals. The soluble mineral means a water-soluble mineral. Specific forms of soluble minerals include free minerals and minerals bound to soluble proteins. The soluble mineral can take the form of at least one (that is, either one or both) of these forms.

Another example of an embodiment of a mineral enrichment use in the soluble fraction (hereinafter, it is also described as "second use".) includes a use to enhance the binding of minerals to soluble proteins. The soluble protein means a water-soluble protein.

The mineral to be enriched is not particularly limited, but preferably includes zinc, iron, calcium, and/or magnesium. In the first use, the mineral to be enriched is more preferably zinc, iron, and/or calcium, further preferably zinc and/or iron, still more preferably zinc and iron, among zinc, iron, calcium, and magnesium. In the second use, the mineral to be enriched is more preferably zinc, iron, and/or calcium, further preferably zinc, iron, and calcium, among zinc, iron, calcium, and magnesium.

Mineral enrichment in the soluble fraction can be confirmed by an increase in the amount of any form of mineral present in the soluble fraction as compared with the case where a protein deamidase is not used (that is, when the plant protein-containing liquid composition is treated under the same conditions except that a protein deamidase is not used).

In the first use of the agent for mineral enrichment of the present invention, the increase in the amount of soluble minerals can be confirmed by the fact that the amount of minerals present in the soluble fraction (specifically, the total amount of free minerals and minerals bound to soluble proteins) is increased as compared with the case where a protein deamidase is not used (that is, when the plant protein-containing liquid composition is treated under the same conditions except that a protein deamidase is not used).

In the second use of the agent for mineral enrichment of the present invention, the improvement in the binding of minerals to soluble proteins can be confirmed by the fact that the amount of minerals present in the soluble proteins fraction (specifically, the amount of minerals bound to soluble proteins) is increased as compared with the case where a protein deamidase is not used (that is, when the plant protein-containing liquid composition is treated under the same conditions except that a protein deamidase is not used).

A plant protein-containing liquid composition to which the agent for mineral enrichment of the present invention is applied, and a specific method of use thereof will be described in detail in "2. Method for mineral enrichment in soluble fraction of plant protein-containing liquid composition, method for increasing amount of soluble minerals in plant protein-containing liquid composition, and method for improving binding of minerals in plant protein-containing liquid composition to soluble proteins".

1-2. Protein deamidase

Protein deamidase is an active ingredient that contributes to the mineral enrichment (more specifically, the increase in the amount of soluble minerals, or the improvement in the binding of minerals to soluble proteins) of the agent for mineral enrichment of the present invention. As the protein deamidase, the type, origin, and the like of the enzyme are not particularly limited as long as the enzyme exhibits an action of decomposing an amide group-containing side chain of a protein without cleaving a peptide bond and without crosslinking the protein. Examples of the protein deamidase include protein deamidase derived from genus Chryseobacterium, genus Flavobacterium, genus Empedobacter, genus Sphingobacterium, genus Aureobacterium, or genus Myroides, which are disclosed in Japanese Patent Laid-open Publication No. 2000-50887, Japanese Patent Laid-open Publication No. 2001-218590, and PCT International Publication No. 2006/075772. These protein deamidases may be used alone or in combination of two or more types.

Examples of the protein deamidase include protein glutaminase (EC3.5.1.44) and protein asparaginase, and also include protein arginine deiminase in a broad sense. Among these protein deamidase enzymes, protein glutaminase is preferable from the viewpoint of further enhancing the mineral enrichment effect.

Among these protein deamidase enzymes, a protein deamidase derived from the genus Chryseobacterium is more preferable, a protein glutaminase derived from the genus Chryseobacterium is further preferable, and a protein glutaminase derived from Chryseobacterium proteolyticum species is still more preferable, from the viewpoint of further enhancing the mineral enrichment effect.

The protein deamidase can be prepared from a culture solution of a microorganism from which the protein deamidase is derived. Specific examples of the preparation method include a method of collecting a protein deamidase from a culture solution or bacterial cells of the above microorganism. For example, in the case of using a microorganism that secretes a protein deamidase, after bacterial cells are collected from the culture solution in advance by filtration, centrifugation or the like as necessary, the enzyme can be separated and/or purified. Furthermore, in the case of using a microorganism that does not secrete a protein deamidase, after bacterial cells are collected from the culture solution in advance as necessary, the bacterial cells are disrupted by pressurization treatment, ultrasonic treatment, or the like to expose the enzyme, and then the enzyme can be separated and/or purified. As an enzyme separation and/or purification method, a known protein separation and/or purification method can be used without particular limitation, and examples thereof include a centrifugal separation method, a UF concentration method, a salting-out method, various chromatography methods using an ion exchange resin, and the like. The separated and/or purified enzyme may be powdered by a drying method such as freeze drying or reduced pressure drying, or may be powdered using an appropriate excipient and/or drying aid in the drying method. In addition, the separated and/or purified enzyme may be liquefied by adding an appropriate additive and subjecting it to filtration sterilization. Furthermore, as the protein deamidase, a commercially available product can also be used.

The amount of the protein deamidase contained in the agent for mineral enrichment of the present invention is not particularly limited as long as the effect of the protein deamidase can be effectively obtained when the agent for mineral enrichment of the present invention is used, and examples thereof include 0.1 to 5,000 U/g.

For the activity of the protein deamidase, the amount of enzyme liberating 1 μmol of ammonia per minute using benzyloxycarbonyl-L-glutaminylglycine (Z-Gln-Gly) as a substrate is defined as 1 unit (1 U).

1-3. Other components

The agent for mineral enrichment of the present invention may or may not contain, as components other than the protein deamidase, additives and/or bases acceptable for enzyme preparations. Examples of such additives and bases include an excipient, a drying aid, a buffer, an antioxidant, an ultraviolet inhibitor, a preservative, an antiseptic, a pH adjuster, a dispersant, an emulsifier, a dissolution aid, a carrier, a solvent (water or the like) or the like. These additives and bases may be used alone or in combination of two or more types. In addition, the contents of these additives and bases may be appropriately set according to such as the type and/or formulation of these components.

The agent for mineral enrichment of the present invention may or may not contain other enzymes as components other than the protein deamidase. Preferably, the agent for mineral enrichment of the present invention does not contain phytase.

1-4. Property

The property of the agent for mineral enrichment of the present invention is not particularly limited, and examples thereof include powdered, fine granular, granular dry formulations, and liquid formulations.

2. Method for mineral enrichment in soluble fraction of plant protein-containing liquid composition, method for increasing amount of soluble minerals in plant protein-containing liquid composition, and method for improving binding of minerals in plant protein-containing liquid composition to soluble proteins

As described above, the protein deamidase contributes to the mineral enrichment (more specifically, the increase in the amount of soluble minerals, or the improvement in the binding of minerals to soluble proteins) of the plant protein-containing liquid composition. Therefore, the present invention further provides a method for mineral enrichment in a soluble fraction of a plant protein-containing liquid composition, the method including the step of allowing a protein deamidase to act on the plant protein-containing liquid composition (more specifically, a method for increasing the amount of soluble minerals in a plant protein-containing liquid composition, including the step of allowing a protein deamidase to act on the plant protein-containing liquid composition; and a method for improving binding of minerals in a plant protein-containing liquid composition to soluble proteins, including the step of allowing a protein deamidase to act on the plant protein-containing liquid composition).

In the mineral enrichment method of the present invention, the "soluble fraction", "mineral enrichment", "increase in soluble mineral amount", "improvement in binding to soluble proteins", "minerals", "protein deamidase", and the like are as described in detail in the above "1. Agent for mineral enrichment of plant protein-containing liquid composition".

2-1. Step of allowing protein deamidase to act on plant protein-containing liquid composition

In the step of allowing the protein deamidase to act on the plant protein-containing liquid composition, a plant protein mixture containing the plant protein-containing liquid composition and the protein deamidase is appropriately prepared, and a treatment for allowing an enzymatic reaction to proceed is performed.

2-1-1. Plant protein-containing liquid composition

The plant protein-containing liquid composition to which the agent for mineral enrichment of the plant protein-containing liquid composition of the present invention is to be applied is not particularly limited as long as it is a liquid containing a plant protein and minerals and containing water.

2-1-1-1. Specific form of plant protein-containing liquid composition

Examples of the specific form of the plant protein-containing liquid composition include such as (i) liquids obtained by a method in which, using a dried powder of a plant raw material (that is, an organ of a plant derived from plant protein or a part thereof) as a plant protein material, the plant protein material or water-soaked material thereof is dispersed in water, and as necessary, water-insoluble matters derived from the plant raw material are removed by any means such as centrifugal filtration, filtration, filter bag, sieve or the like; (ii) liquids obtained by a method in which, using a plant raw material itself or a dried product thereof as the plant protein material, the plant protein material or water-soaked material thereof is crushed and dispersed in water, and as necessary, water-insoluble matters derived from the plant raw material are removed by any means such as centrifugal filtration, filtration, filtration bag, sieve or the like; (iii) liquids obtained by a method in which the content of a plant protein is increased by such as removing at least a part of components other than the plant protein from the liquid of the above (i) or (ii) (however, minerals derived from the plant raw material are also included); and (iv) liquids obtained by a method in which, using a dried powder prepared from the liquid of any one of the above (i) to (iii) as the plant protein material, the plant protein material or water-soaked material thereof is dissolved and/or dispersed in water.

Preferable examples of the plant protein-containing liquid composition include liquids obtained by dispersing a dried powder of the plant protein material or the water-soaked material thereof in water among the liquids of the above (i); liquids obtained by crushing and dispersing the plant protein material itself or the water-soaked material thereof in water among the liquids of the above (ii); and those corresponding to the preferred liquids (i) and (ii) among the liquids (iv). Preferable specific examples of the plant protein-containing liquid composition include plant milk.

2-1-1-2. Plant protein

The plant protein is not particularly limited as long as it is derived from any raw material containing a plant protein and minerals (plant raw material). Examples of the plant raw material from which the plant protein is derived include pulse crops such as soybean, pea, lentil, chickpea, black soybean, broad bean, mung bean, lupin bean, and kidney bean; cereal crops such as wheat, barley, oats, sorghum, rice, rye, buckwheat, barnyard millet, foxtail millet, teff, corn, and potato; and nuts and seeds such as almond, coconut, peanut, cashew nut, hazelnut, pecan nut, macadamia nut, pistachio, walnut, brazil nut, pili nut, chestnut, sesame, pine nut, hemp seed (The hemp seed refers to a so-called industrial hemp, and specifically refers to a cultivar which does not contain tetrahydrocannabinol (THC) causing perceptual alterations or has a low THC concentration. Since industrial hemp does not contain THC or has a low concentration thereof, it has no efficacy as a perceptual alteration drug or cannot lead to abuse.), chia seed, Quinoa, amaranthus, canary seed, and linseed.

In the present invention, the plant protein may be derived from one type of the plant raw material alone, or may be derived from a combination of two or more types.

Among the above plant proteins, pulse crops, cereal crops, and nuts and seeds are preferable, and plant proteins derived from soybean, pea, lentils, chickpeas, broad beans, mung beans, wheat, barley, sorghum, rice, rye, corn, almond, coconut, peanut, cashew nut, hazelnut, pistachio, walnut, and hemp seed (industrial hemp) are more preferable, from the viewpoint of further enhancing the mineral enrichment effect.

Among the above plant proteins, pulse crops, cereal crops, and nuts and seeds are preferable, and plant proteins derived from soybean, pea, lentils, chickpeas, broad beans, mung beans, wheat, barley, sorghum, rice, rye, corn, almond, coconut, peanut, hazelnut, pistachio, walnut, and hemp seed (industrial hemp) are more preferable, from the viewpoint of further enhancing the effect of increasing the amount of soluble minerals.

Among the above plant proteins, pulse crops and nuts and seeds are preferable, and plant proteins derived from soybean, pea, lentils, chickpeas, broad beans, coconut, peanut, cashew nut, hazelnut, and pistachio are more preferable, from the viewpoint of further enhancing the effect of improving the binding of minerals to soluble proteins.

As the plant protein material, the plant raw material itself, a dried product of the plant raw material, a dried powder of the plant raw material, a material obtained by processing the plant raw material to remove at least a part of components other than the plant protein, thereby increasing the content of the plant protein (however, minerals derived from plant raw materials are also included), or the like is used.

The content of the plant protein in the plant protein material is, for example, 0.01% by weight or more, preferably 0.1% by weight or more, more preferably 0.5% by weight or more, 1% by weight or more, or 3% by weight or more, further preferably 5% by weight or more, still more preferably 6% by weight or more, 7% by weight or more, 8% by weight or more, 9% by weight or more, 10% by weight or more, 15% by weight or more, 20% by weight or more, 25% by weight or more, or 30% by weight or more. The upper limit of the content range is not particularly limited, and is, for example, 95% by weight or less, or 90% by weight or less, preferably 80% by weight or less, 70% by weight or less, or 60% by weight or less, more preferably 55% by weight or less, 50% by weight or less, or 45% by weight or less, still more preferably 40% by weight or less, 35% by weight or less, 30% by weight or less, 25% by weight or less, 20% by weight or less, 15% by weight or less, or 10% by weight or less.

The content of the plant protein material in the plant protein-containing liquid composition is, for example, 0.1 to 50% by weight, 0.5 to 40% by weight, or 1 to 30% by weight, preferably 2 to 25% by weight, or 2.5 to 20% by weight, more preferably 5 to 15% by weight, and further preferably 8 to 12% by weight.

The content of the plant protein in the plant protein-containing liquid composition is, for example, 0.001 % by weight or more, preferably 0.01% by weight or more, more preferably 0.05% by weight or more, 0.1% by weight or more, or 0.3% by weight or more, further preferably 0.5% by weight or more, still more preferably 0.6% by weight or more, 0.7% by weight or more, 0.8% by weight or more, 0.9% by weight or more, 1% by weight or more, 2% by weight or more, or 3% by weight or more. The upper limit of the content range is not particularly limited, and is, for example, 9.5% by weight or less, or 9% by weight or less, preferably 8% by weight or less, 7% by weight or less, or 6% by weight or less, more preferably 5.5% by weight or less, 5% by weight or less, or 4.5% by weight or less, still more preferably 4% by weight or less, 3.5% by weight or less, 3% by weight or less, 2.5% by weight or less, 2% by weight or less, 1.5% by weight or less, or 1% by weight or less.

2-1-1-3. Other components

The plant protein-containing liquid composition may or may not contain one or two or more optional components as other components in addition to the plant protein and the minerals derived from plant raw materials. Examples of the other components include components other than proteins and minerals derived from plant raw materials, other food materials, and food additives. Examples of the food additive include a thickener, a binder, a seasoning, a pH adjusting agent, a buffering agent, a coloring agent, a flavor, and the like.

2-1-2. Amount of protein deamidase used

As the protein deamidase, one described in the above "1-2. Protein deamidase" is used.

The amount of the protein deamidase to be used for the plant protein-containing liquid composition may be appropriately determined by those skilled in the art according to the degree of the target mineral enrichment effect.

For example, the amount of the protein deamidase used per 1 g of the plant protein contained in the plant protein-containing liquid composition is, for example, 0.005 U or more, or 0.01 U or more, preferably 0.05 U or more, or 0.1 U or more, more preferably 0.5 U or more, further preferably 1 U or more, still more preferably 2 U or more, or 3 U or more. The upper limit of the use amount range is not particularly limited, and is, for example, 5000 U or less, or 1000 U or less, preferably 500 U or less, or 100 U or less, more preferably 50 U or less, or 25 U or less, further preferably 20 U or less, 15 U or less, or 10 U or less, still more preferably 7 U or less.

In addition, the amount of the protein deamidase used per 1 g of the plant protein material contained in the plant protein-containing liquid composition is, for example, 0.0005 U or more, preferably 0.005 U or more, more preferably 0.025 U or more, 0.05 U or more, or 0.15 U or more, further preferably 0.25 U or more, still more preferably 0.3 U or more, 0.35 U or more, 0.4 U or more, 0.45 U or more, 0.5 U or more, 1 U or more, or 1.5 U or more. The upper limit of the use amount range is not particularly limited, and is, for example, 4.7 U or less, or 4.5 U or less, preferably 4 U or less, 3.5 U or less, or 3 U or less, more preferably 2.7 U or less, 2.5 U or less, or 2.3 U or less, still more preferably 2 U or less, 1.7 U or less, 1.5 U or less, 1.2 U or less, 1 U or less, 0.7 U or less, or 0.5 U or less.

### 2-1-3. Treatment conditions

The plant protein mixture is subjected to treatment conditions that proceed an enzymatic reaction that enriches minerals. These conditions can be appropriately determined by those skilled in the art through a preliminary test or the like depending on the optimum temperature and optimum pH of the protein deamidase to be used and the degree of the target mineral enrichment effect.

Specifically, the temperature condition can be determined according to the optimum temperature of the protein deamidase to be used, and the like, and is, for example, 20 to 70°C, preferably 40 to 60°C, more preferably 45 to 55°C, and further preferably 47 to 53°C. The pH condition can be determined according to such as the optimum pH of the protein deamidase to be used, and the pH at 25°C is, for example, 4 to 9, preferably 5 to 8, more preferably 6 to 8. The time condition can be determined according to the reaction scale or the like, and is, for example, 1 to 48 hours, preferably 1 to 24 hours, more preferably 8 to 20 hours, or 10 to 18 hours.

### 2-2. Other steps

The mineral enrichment method of the plant protein-containing liquid composition of the present invention and the like may or may not include steps other than the step of allowing the protein deamidase to act. Examples of the other steps include a step of preparing a plant protein-containing liquid composition, an enzyme deactivation step, a filtration step, a concentration step, a drying step, and the like. These other steps may be performed singly or in combination of two or more steps.

The step of preparing the plant protein-containing liquid composition is specifically as described above as the method for obtaining the liquids of (i) to (iv) in the above "2-1-1-1. Specific form of plant protein-containing liquid composition".

In the enzyme deactivation step, any method of losing enzyme activity is used according to such as the optimum temperature and the optimum pH of the protein deamidase to be used, and heat deactivation is preferably used. Specific conditions for heat deactivation include, for example, heating at 90°C to a boiling temperature, preferably at 95°C to a boiling temperature, specifically at a temperature of 95 to 100°C, for 5 to 15 minutes, preferably 7 to 12 minutes.

In the filtration step, any method for separating the water-insoluble fraction from the water-soluble fraction can be used. Specific examples of the method include centrifugation, pressure filtration, and the like.

In the concentration step, any method can be used in which at least some components of the liquid to be treated are removed to obtain a concentrate of a fluid such as a liquid. Specific examples of the method include a concentration method by water removal, and a method of separating a low molecular weight fraction and a soluble protein fraction (for example, an ultrafiltration method or the like) or the like. Among the methods of the present invention, according to the method corresponding to the second use, since the mineral can be bound to the soluble protein, it is possible to reduce the mineral outflow to the low molecular weight fraction even when the soluble protein is concentrated by using a method of separating the low molecular weight fraction and the soluble protein fraction as another step.

In the drying step, any drying method can be used. Specific examples of the method include freeze drying, vacuum drying, spray drying, and the like.

### 2-3. Deliverables

The processed plant protein-containing composition processed by the method of the present invention may be a fluid such as a liquid or a dried product depending on the selection of other steps. The processed plant protein-containing composition obtained by the method of the present invention is enriched with minerals in the soluble fraction in the presence of water.

The processed plant protein-containing composition obtained by the method of the present invention can be applied to, for example, a plant milk-related product. Examples of the classification of the plant milk-related product include plant milk and plant cream (also including dried products thereof), and plant milk fermented product (for example, plant cheese, plant yogurt, or the like) or the like.

Examples

Hereinafter, the present invention will be specifically described with reference to examples, but the present invention is not construed as being limited to the following examples.

[A. Plant protein materials]

Plant protein materials shown in Table 1 were used. Among the following plant materials, the hemp protein material does not contain THC (tetrahydrocannabinol).

[Table 1]

| Product name | Derived plant | Manufacturer | Protein content (% by weight) |
|---|---|---|---|
| Soybean flour made from germinated soybeans | Soybean | KENKOMAI NO KODAMA | 36.70% |
| Yellow split peas | Pea | Waitrose | 31.70% |
| Broad bean | Broad bean | MAMEYA NO SOKOJIKARA | 26% |
| Organic chickpea | Chickpea | OHSAWA JAPAN | 20% |
| Moong whole mung bean | Mung bean | Ohtsuya | 37.65% |
| Lentil | Lentil | MAMEYA NO SOKOJIKARA | 23.20% |
| Whole wheat flour | Wheat | TOMIZ/Cuoca (TOMIZAWA SHOTEN) | 14% |
| White sorghum flour | Sorghum | NAKANO INDUSTRY CO., LTD. | 9.60% |
| Whole barley flour | Barley | TOMIZ/Cuoca (TOMIZAWA SHOTEN) | 13% |
| Whole rye flour | Rye | TOMIZ/Cuoca (TOMIZAWA SHOTEN) | 7.50% |
| Corn flour | Corn | KENKOMAI NO KODAMA | 6.60% |
| Brown rice flour | Rice | KENKOMAI NO KODAMA | 7.10% |
| Almond | Almond | TOMIZ/Cuoca (TOMIZAWA SHOTEN) | 10.30% |
| Peanut | Peanut | KOBE NO OMAMEYA MINOYA | 26.50% |
| Hazelnut | Hazelnut | TOMIZ/Cuoca (TOMIZAWA SHOTEN) | 13.36% |
| Cashew nut | Cashew nut | KOBE NO OMAMEYA MINOYA | 18.20% |
| Coconut | Coconut | Alishan | 7% |
| Pistachio | Pistachio | SUKOYAKA SHOTEN | 17.40% |
| Walnut | Walnut | TOMIZ/Cuoca (TOMIZAWA SHOTEN) | 14.60% |
| Hemp | Hemp | IMAGAWA SEIKA | 29.50% |

[B. Protein deamidase]

As a protein deamidase, protein glutaminase derived from Chryseobacterium proteolyticum (manufactured by Amano Enzyme Inc.) was used. Hereinafter, this protein deamidase is also referred to as "PG".

The protein deamidase activity was measured by the following method.

0.1 mL of a sample solution containing a protein deamidase was added to 1 mL of a 0.2 M phosphate buffer (pH 6.5) containing 30 mM Z-Gln-Gly, and the mixture was allowed to stand at 37°C for 10 minutes, and then 1 mL of a 0.4 M TCA solution was added to stop the reaction. As a blank, 1 mL of a 0.4 M TCA solution was added to 1 mL of a 0.2 M phosphate buffer (pH 6.5) containing 30 mM Z-Gln-Gly, 0.1 mL of a sample solution containing a protein deamidase was further added, and the mixture was allowed to stand at 37°C for 10 minutes.

As to the solution obtained above, the amount of ammonia generated in the reaction solution was measured using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

The activity of the protein deamidase was calculated from the following formula using the amount of enzyme that produces 1 μmol ammonia per minute as one unit (1 U). In the formula, the reaction solution amount is 2.1, the enzyme solution amount is 0.1, and Df is a dilution rate of the enzyme solution. Further, 17.03 is a molecular weight of ammonia.

[Expression 1]

$$\begin{aligned} &\text{Protein deamidase activity (U/mL)} \\ &= \text{Ammonia concentration in reaction solution (mg/L)} \times (1/17.03) \times (\text{Reaction solution amount/enzyme solution amount}) \times (1/10) \times \text{Df} \end{aligned}$$

[C. Production of processed plant protein-containing liquid composition enriched with minerals]

To 40 g of each of the plant protein materials shown in the above "A. Plant protein materials", 360 mL of water was added, so that the plant protein materials were immersed overnight to soften the plant protein materials. Thereafter, the total amount of a mixture containing the plant protein materials and water was applied to a mixer, and the plant protein material was crushed to obtain a plant protein-containing liquid composition. PG in an amount of 5.0 U per 1 g of plant protein was added to the plant protein-containing liquid composition, and the mixture was reacted overnight at 50°C. After the enzymatic reaction, the reaction mixture was treated in a boiling water bath for 10 minutes to be heat-deactivated.

[C1. Samples for evaluation of increase in soluble mineral amount]

After heat deactivation, the solid content (water-insoluble fraction) was removed by centrifugation (15,000 rpm, 5 min) to obtain a processed plant protein-containing liquid composition (hereinafter, it is described as "PG-treated plant milk".). Separately, the same procedure was carried out except that PG was not added to the plant protein-containing liquid composition to obtain a processed plant protein-containing liquid composition untreated with PG (hereinafter, it is described as "PG-untreated plant milk".).

[C2. Samples for evaluation of improvement in binding to soluble protein]

The obtained PG-treated and PG-untreated plant milk were concentrated 10-fold using a 3,000 NMWL centrifugal ultrafiltration filter. Whereby, a fraction in which soluble protein was concentrated (hereinafter, it is described as "soluble protein fraction".) and a low molecular weight fraction that passed through the filter (hereinafter, it is described as "low molecular weight fraction".) were obtained.

[D. Mineral enrichment evaluation]

Enrichment of zinc, iron, calcium and/or magnesium of the obtained PG-treated plant milk was evaluated using the following mineral measurement kit.

[Table 2]

| Zinc | Metalloassay "Zinc assay LS" | Manufactured by Metallogenics Co., Ltd. |
|------|------------------------------|------------------------------------------|
| Magnesium | Metalloassay "Magnesium assay LS" | Manufactured by Metallogenics Co., Ltd. |

(continued)

| Calcium | Metalloassay "Calcium assay LS (CPZIII)" | Manufactured by Metallogenics Co., Ltd. |
|---|---|---|
| Iron | Metalloassay "Iron assay LS (Ferrozine method)" | Manufactured by Metallogenics Co., Ltd. |

[D1. Evaluation of increase in soluble mineral amount]

The mineral amount of each of the PG-treated plant milk and the PG-untreated plant milk obtained in the above "C1. Samples for evaluation of increase in soluble mineral amount" was measured. From the obtained measured values, the soluble mineral amount increase rate was calculated by the following formula. The larger this value was, the more the amount of soluble minerals was increased (the amount of minerals present in the soluble fraction was increased as compared to that in the case where PG was not used), thus indicating that minerals were enriched in the soluble fraction of the plant protein-containing liquid composition. The results are shown in Table 3.

[Expression 2]

$$\text{Soluble mineral amount increase rate} = \frac{\text{Mineral amount in PG-treated plant milk}}{\text{Mineral amount in PG-untreated plant milk}}$$

[Table 3]

| | Plant protein material | Protein content in composition (% by weight) | PG addition amount (U) per 1 g of protein | PG addition amount (U) per 1 g of material | Soluble mineral amount increase rate | | | |
|---|---|---|---|---|---|---|---|---|
| | | | | | Zinc | Iron | Calcium | Magnesium |
| Example 1 | Wheat | 1.40% | 5 | 0.7 | 2.45 | 2.25 | | |
| Example 2 | Corn | 0.66% | 5 | 0.33 | 3.2 | 2.45 | | |
| Example 3 | Sorghum | 0.96% | 5 | 0.48 | 1.94 | 3.09 | | |
| Example 4 | Barley | 1.30% | 5 | 0.65 | 1.18 | 1.61 | | |
| Example 5 | Rice | 0.71% | 5 | 0.36 | 1.33 | | | |
| Example 6 | Rye | 0.75% | 5 | 0.38 | 1.72 | | 1.29 | 1.18 |
| Example 7 | Lentil | 2.32% | 5 | 1.16 | 1.95 | 2.29 | 1.11 | |
| Example 8 | Soybean | 3.67% | 5 | 1.84 | 1.54 | 1.49 | 1.12 | |
| Example 9 | Mung bean | 3.77% | 5 | 1.88 | 1.45 | 1.56 | | |
| Example 10 | Chickpea | 2.00% | 5 | 1 | 1.37 | 3.11 | | |
| Example 11 | Broad bean | 2.60% | 5 | 1.3 | 3.44 | 1.69 | | |
| Example 12 | Pea | 3.17% | 5 | 1.59 | 1.75 | 1.68 | | |
| Example 13 | Peanut | 2.65% | 5 | 1.33 | 1.86 | 1.55 | 1.72 | 1.68 |
| Example 14 | Pistachio | 1.74% | 5 | 0.87 | 1.49 | 1.81 | 1.19 | |
| Example 15 | Hemp | 2.95% | 5 | 1.48 | 1.3 | | | |
| Example 16 | Walnut | 1.46% | 5 | 0.73 | 1.17 | | | |
| Example 17 | Hazelnut | 1.34% | 5 | 0.67 | 1.8 | | | |
| Example 18 | Coconut | 0.70% | 5 | 0.35 | | 1.41 | | |
| Example 19 | Almond | 1.03% | 5 | 0.52 | - | 1.9 | | |

(continued)

| | Plant protein material | Protein content in composition (% by weight) | PG addition amount (U) per 1 g of protein | PG addition amount (U) per 1 g of material | Soluble mineral amount increase rate | | | |
|---|---|---|---|---|---|---|---|---|
| | | | | | Zinc | Iron | Calcium | Magnesium |
| Comparative Example 1 | Water | - | 5 | - | 1.01 | 1.01 | 1.03 | 1.03 |

As shown in Table 3, PG treatment increased the soluble mineral amount and thus mineral enrichment of plant milk was observed.

Specifically, the enrichment of zinc (increase in soluble zinc amount) was observed in the plant milk of wheat, corn, sorghum, barley, rice, rye, lentil, soybean, mung bean, chickpea, broad bean, pea, peanut, pistachio, hemp, walnut, and hazelnut, and was particularly remarkable in the plant milk of wheat, corn, and broad bean.

The enrichment of iron (increase in soluble iron amount) was observed in the plant milk of wheat, corn, sorghum, barley, lentil, soybean, mung bean, chickpea, broad bean, pea, peanut, pistachio, coconut, and almond, and was particularly remarkable in the plant milk of wheat, corn, sorghum, lentil, and chickpea.

The enrichment of calcium (increase in soluble calcium amount) was observed in the plant milk of rye, lentil, soybean, peanut, and pistachio. The enrichment of magnesium (increase in soluble magnesium amount) was observed in the plant milk of rye and peanut.

Also, in the peanut milk, the enrichment (increase in soluble mineral amount) was observed for all four minerals.

[D2. Evaluation of improvement in binding to soluble protein]

The mineral amount of each of the soluble protein fraction and the low molecular weight fraction obtained in the above "C2. Samples for evaluation of improvement in binding to soluble protein" was measured. From the obtained measured values, the binding rate to soluble protein was calculated by the following formula.

[Expression 3]

$$\text{Binding rate to soluble protein} = \frac{\text{Mineral amount in soluble protein fraction}}{\text{Mineral amount in low molecular weight fraction}}$$

Using the obtained binding rate to soluble protein, the improvement rate in binding to soluble protein was calculated by the following formula. The larger this value was, the more the binding of the mineral to the soluble protein was improved (the amount of mineral present in the soluble protein fraction was increased as compared to when PG was not used), thus indicating that minerals were enriched in the soluble fraction of the plant protein-containing liquid composition. The results are shown in Table 4.

[Expression 4]

$$\text{Improvement rate in binding to soluble protein} = \frac{\text{Binding rate to soluble protein in PG-treated plant milk}}{\text{Binding rate to soluble protein in PG-untreated plant milk}}$$

[Table 4]

| | Plant protein material | Protein content in composition (% by weight) | PG addition amount (U) per 1 g of protein | PG addition amount (U) per 1 g of material | Improvement rate in binding to soluble protein | | | |
|---|---|---|---|---|---|---|---|---|
| | | | | | Zinc | Iron | Calcium | Magnesium |
| Example 7 | Lentil | 2.32% | 5 | 1.16 | 2.85 | 3.88 | 1.14 | 1.15 |
| Example 8 | Soybean | 3.67% | 5 | 1.84 | 12.71 | 3.34 | 1.69 | |
| Example 10 | Chickpea | 2.00% | 5 | 1 | 7.27 | 1.22 | 1.53 | |
| Example 11 | Broad bean | 2.60% | 5 | 1.3 | 2.65 | 3.88 | 1.15 | |
| Example 12 | Pea | 3.17% | 5 | 1.59 | 5.18 | 6.42 | 2.08 | 1.19 |
| Example 13 | Peanut | 2.65% | 5 | 1.33 | 3.56 | 8.92 | 3.29 | |
| Example 14 | Pistachio | 1.74% | 5 | 0.87 | 2.14 | 1.21 | 1.59 | 2.11 |
| Example 17 | Hazelnut | 1.34% | 5 | 0.67 | 1.79 | 3.67 | 2.07 | 1.16 |
| Example 18 | Coconut | 0.70% | 5 | 0.35 | 1.13 | 1.83 | 1.22 | |
| Example 20 | Cashew nut | 1.82% | 5 | 0.91 | 4.24 | 8.91 | 2.12 | 1.76 |

As shown in Table 4, PG treatment improved the binding to soluble protein and thus mineral enrichment of plant milk was observed.

Specifically, the enrichment (improved binding to soluble protein) of zinc, iron, and calcium was observed in the plant milk of pulse crops and nuts and seeds, such as lentil, soybean, chickpea, broad bean, pea, peanut, pistachio, hazelnut, coconut, and cashew nut; and the enrichment (improved binding to soluble protein) of zinc, iron, calcium, and magnesium was observed in the plant milk of lentil, pea, pistachio, hazelnut, and cashew nut.

In particular, the enrichment (improved binding to soluble protein) of zinc was remarkable in the plant milk of soybean, chickpea, pea, and cashew nut; the enrichment (improved binding to soluble protein) of iron was remarkable in the plant milk of pea, peanut, and cashew nut; the enrichment (improved binding to soluble protein) of calcium was remarkable in the plant milk of pea, peanut, hazelnut, and cashew nut; and the enrichment (improved binding to soluble protein) of magnesium was remarkable in the plant milk of pistachio.

Also, in the plant milk of lentil, pea, pistachio, hazelnut, and cashew nut, the enrichment (improved binding to soluble protein) was observed for all four minerals.

**Claims**

1. An agent for mineral enrichment in a soluble fraction of a plant protein-containing liquid composition, the mineral enrichment agent comprising a protein deamidase.

2. The agent for mineral enrichment of a plant protein-containing liquid composition according to claim 1, which is used for increasing the amount of soluble minerals.

3. The agent for mineral enrichment of a plant protein-containing liquid composition according to claim 1, which is used for improving binding of minerals to soluble proteins.

4. The agent for mineral enrichment of a plant protein-containing liquid composition according to claim 1, wherein the minerals are selected from the group consisting of zinc, iron, calcium, and magnesium.

5. The agent for mineral enrichment of a plant protein-containing liquid composition according to claim 1, wherein the protein deamidase is protein glutaminase.

6. The agent for mineral enrichment of a plant protein-containing liquid composition according to claim 1, wherein the plant protein is a protein of a plant selected from the group consisting of pulse crops, cereal crops, and nuts and seeds.

7. A method for mineral enrichment in a soluble fraction of a plant protein-containing liquid composition, the method comprising the step of allowing a protein deamidase to act on the plant protein-containing liquid composition.

8. A method for increasing the amount of soluble minerals in a plant protein-containing liquid composition, the method comprising the step of allowing a protein deamidase to act on the plant protein-containing liquid composition.

9. A method for improving binding of minerals in a plant protein-containing liquid composition to soluble proteins, the method comprising the step of allowing a protein deamidase to act on the plant protein-containing liquid composition.

**EP 4 691 260 A1**

## INTERNATIONAL SEARCH REPORT

| International application No. |
|---|
| **PCT/JP2024/014021** |

| A. | CLASSIFICATION OF SUBJECT MATTER |
|---|---|

*A23L 5/00*(2016.01)i; *A23J 3/14*(2006.01)i; *A23J 3/34*(2006.01)i; *A23L 2/38*(2021.01)i; *A23L 2/52*(2006.01)i; *A23L 2/66*(2006.01)i
FI: A23L5/00 J; A23J3/14; A23J3/34; A23L2/00 F; A23L2/00 J; A23L2/38 B; A23L2/38 D; A23L2/38 J

According to International Patent Classification (IPC) or to both national classification and IPC

| B. | FIELDS SEARCHED |
|---|---|

Minimum documentation searched (classification system followed by classification symbols)

A23L5/00; A23J3/14; A23J3/34; A23L2/38; A23L2/52; A23L2/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/MEDLINE/EMBASE/BIOSIS (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2000-050887 A (AMANO PHARMACEUT. CO., LTD.) 22 February 2000 (2000-02-22) | 1-9 |
| | claim 22, paragraphs [0023], [0052]-[0053], [0056], [0059], examples 11-13 | |
| Y | | 1-9 |
| X | JP 2001-218590 A (AMANO ENZYME INC.) 14 August 2001 (2001-08-14) | 1-9 |
| | claim 25, paragraphs [0022], [0049]-[0050], [0053], [0056], examples 7-10 | |
| Y | | 1-9 |
| X | WO 2015/133590 A1 (AJINOMOTO CO., INC.) 11 September 2015 (2015-09-11) | 1-9 |
| | claims, paragraphs [0083]-[0085], [0089], [0092], [0094] | |
| Y | | 1-9 |
| Y | US 2022/0079187 A1 (RIPPLE FOODS, PBC) 17 March 2022 (2022-03-17) | 1-9 |
| | claims, paragraphs [0004]-[0007], examples, etc. | |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**14**

**INTERNATIONAL SEARCH REPORT**

| International application No. |
|---|
| **PCT/JP2024/014021** |

### C. DOCUMENTS CONSIDERED TO BE RELEVANT

| Category* | Citation of document, with indication, where appropriate, of the relevant passages | Relevant to claim No. |
|---|---|---|
| Y | JP 2001-163800 A (UNIV. NIHON) 19 June 2001 (2001-06-19)<br>paragraph [0004], test example 3, fig. 7 | 1-9 |
| A | JP 11-322790 A (AJINOMOTO CO., INC.) 24 November 1999 (1999-11-24)<br>entire text | 1-9 |
| A | JP 4-349869 A (AJINOMOTO CO., INC.) 04 December 1992 (1992-12-04)<br>entire text | 1-9 |
| A | 金東浩 ほか, 大豆たん白質からのカルシウム吸収促進ペプチドの作出, 大豆たん白質研究., 1998, vol. 1, pages 63-68, (JIN, Dong Hao et al., Inhibition of Calcium Carbonate Crystallization by Soybean Protein Hydrolysate and Its Promotion Effect on Calcium Absorption, Soy Protein Research, Japan)<br>entire text | 1-9 |

Form PCT/ISA/210 (second sheet) (July 2022)

<table>
<tr><td colspan="2">INTERNATIONAL SEARCH REPORT<br>Information on patent family members</td><td>International application No.<br><br>**PCT/JP2024/014021**</td></tr>
</table>

| Patent document<br>cited in search report | Publication date<br>(day/month/year) | Patent family member(s) | Publication date<br>(day/month/year) |
|---|---|---|---|
| JP 2000-050887 A | 22 February 2000 | US 2004/0072318 A1<br>claims, examples, etc.<br>EP 976829 A2 | |
| JP 2001-218590 A | 14 August 2001 | US 2004/0166558 A1<br>claims, examples, etc.<br>EP 1106696 A1 | |
| WO 2015/133590 A1 | 11 September 2015 | US 2020/0318093 A1<br>claims, etc.<br>EP 3130671 A1 | |
| US 2022/0079187 A1 | 17 March 2022 | WO 2020/150583 A1<br>EP 3911177 A1<br>CN 113438901 A | |
| JP 2001-163800 A | 19 June 2001 | US 6656511 B1<br>test example 3, fig. 7, etc.<br>WO 2001/041777 A1 | |
| JP 11-322790 A | 24 November 1999 | (Family: none) | |
| JP 4-349869 A | 04 December 1992 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013513368 W
- JP 2000050887 A
- JP 2001218590 A
- JP 2006075772 W

**Non-patent literature cited in the description**

- *Biotechnol. Adv.*, 1991, vol. 122, 145-161
- *Int. J. Food Sci. Technol.*, 2002, vol. 37, 823-833